# EUROPEAN PATENT SPECIFICATION

(11) **EP 3 717 744 B1**
(45) Date of publication and mention of the grant of the patent: **16.07.2025**
(21) Application number: 18884328.8
(22) Date of filing: 29.11.2018
(51) Int. Cl.: E21D 11/38, F16B 43/00, F16J 15/00

(54) **DISC FOR FIXING AND SEALING A LINING AND METHOD FOR PROVIDING A FLUID TIGHT SUSPENSION OF A MEMBRANE ON TUNNEL WALLS AND METHOD FOR MANUFACTURING SUCH DISC**
SCHEIBE ZUM BEFESTIGEN UND ABDICHTEN EINER AUSKLEIDUNG UND VERFAHREN ZUR BEREITSTELLUNG EINER FLÜSSIGKEITSDICHTEN AUFHÄNGUNG EINER MEMBRAN AN TUNNELWÄNDEN UND VERFAHREN ZUR HERSTELLUNG SOLCH EINER SCHEIBE
DISQUE POUR FIXER ET SCELLER UN REVÊTEMENT ET PROCÉDÉ POUR FOURNIR UNE SUSPENSION ÉTANCHE AUX FLUIDES D'UNE MEMBRANE SUR DES PAROIS DE TUNNEL ET PROCÉDÉ DE FABRICATION D'UN TEL DISQUE

(30) Priority: 29.11.2017 NO 20171905
(43) Date of publication of application: 07.10.2020
(73) Proprietor: Oldroyd Cheetham, John, 3924 Porsgrunn (NO)
(72) Inventor: OLDROYD CHEETHAM, John, 3924 Porsgrunn (NO)
(74) Representative: Acapo AS
(86) International application number: PCT/NO2018/050298
(87) International publication number: WO 2019/108068

(56) References cited:
- WO-A1-03/078853
- WO-A2-2007/006428
- AU-B2- 2012 216 578
- AU-B2- 2012 216 578
- NO-A1- 20 100 813
- NO-A1- 20 100 813
- US-A- 4 230 326
- US-A- 4 712 802
- US-A- 5 069 589

## Description

### TECHNICAL FIELD OF THE INVENTION

The invention relates to a disk for fixing and sealing a lining to a supporting surface, such as the walls and ceiling of a tunnel, also providing a watertight sealing of perforations in a water and frost protection material, such as lining or insulation in a tunnel/rock as further described in the preamble of the independent claims.

### BACKGROUND OF THE INVENTION

In tunnels, on rock walls and similar, there is a need for preventing intrusion of water into the tunnel from the surrounding rock formations. Moreover, there is a need for preventing formation of ice on the inner surface of the lining, i.e. the surface facing the tunnel room, and also possibly for provision of fire protection of the tunnel walls and the ceiling.

Water is leaking out of the rock walls, and during winter seasons, this water also tends to freezes, causing ice masses/icicles hazards. For prevention of such hazard, linings or membranes are widely used before covering the lining with a layer of shotcrete or installing concrete elements. Proper water and frost proofing is a cost-efficient way to extend service life of tunnels, but also to ensure safety of the tunnel both due to accumulation of cracks and/or icicles caused by freezing water.

In order to reduce such hazards where bits of concrete and/or ice may fall down, but also to prevent damage on installed equipment, intrusion of water, frozen road surface or fog, it is known to arrange a watertight and possibly insulating lining or protection on tunnel walls and/or ceilings. The lining or membrane is affixed to the wall and ceiling by means of rock anchor bolts, rigidly fixed to the wall and ceiling of tunnels or the rock, the lining being arranged as a continuous lining along the tunnel in lengthwise sections, and crosswise, forming a water tight, continuous barrier. The barrier is carried and supported inter alia by the rock bolts. At pointwise points where lining is threaded onto the anchor bolts, leakages occur due to perforations made in the lining for threading the lining to the rock bolts. Use of plates or discs together with intermediate seals threaded on to the rock bolt, the discs or plates being positioned on each side of the lining at the rear and/or the front of a tunnel lining for sealing purposes and for load bearing purposes, are known. A backing plate with rubber seal at the rear side and a front washer on the opposite side is one example of such use, where the backing plate with rubber seal establishes a sealing between the bolt and plate and the front washer is establishing a sealing by being pressing the front disc onto the lining.

EP 1950375 B1 describes a prior art support for linings with a seal at the outer side of the construction, securing against traversing water intrusion.

NO 172507 relates to a disc for fixing insulation mats in a tunnel or the like, configured to be supported by bolts anchored in the surrounding rock formation. The disc is provided with a centrally arranged hole or aperture for receipt of the bolt and where the hole or aperture is provided with a sealing element or bushing of an elastic material, extending through the hole or a radially inwards extending flange with a lip shape which, when compressed in axial direction is pressed inwards against the bolt for sealing.

NO 337607 discloses a disc system for fixing a membrane or insulation mats to the rock wall for example in a tunnel by bolts anchored in the wall. The system comprises the disc with a concentric aperture in a solution with a washer and a nut for securing the membrane or insulation mats to the rock wall. The disc fixed closest to the wall and on the inner side of the membrane is different to the disc fixed at the opposite side of the membrane. The disc comprises a pressure seal arranged around the periphery of the disc on the side to be pressed against the membrane. The disk further comprises a seal in the concentric aperture of the disk which may have one or two protruding flanges to be pressed against the thread of the bolt.

US 4,712,802 discloses a sealing washer comprising an apertured metal backing member, a sealing member of resilient material abutting one face of the backing member forming a laminate therewith. The sealing member protrudes out of the concave side of the backing member and the part of the sealing member to be pressed against the bolt for sealing protrudes out of the opposite side of the sealing surface. The sealing side of the backing member is also formed with two concentric ribs of rounded cross sections, one located at the periphery of the washer and one located around the inner central aperture of the washer. The ribs will be pressed against a workpiece, such as a roofing sheet, by means of a headed fastener through the aperture, and prevent water intrusion lateral under the washer and seal around the bolt.

AU 2012 216 578 B2 discloses a sealing device for use in attaching mill linings to mill shells in a grinding mill in order to prevent egress of liquid from the mill interior through the apertures.

US 4 230 326 A discloses a sealing assembly for use on equipment employed by the mining and cement industries.

WO 03/078853 A1 discloses a washer assembly used to secure sheeting material to a substrate, such as roof sheeting.

Before threading the lining onto the anchor bolts, which may be threaded bolts, disks used for sealing purposes are threaded onto the bolts and acts as a sealing and an inner barrier and back support of the lining, at the rear side of the lining. The disk stops at a predefined distance from the tunnel/rock wall or ceiling by means of a stopping device that may be a nut. A seal for sealing the bolt is either preinstalled onto the disk or retrofitted outside of the disk, facing outwards towards the lining. A seal, covering the disk surface facing the lining, is thereafter installed. Then the lining is installed and the seal preinstalled or retrofitted the disk is sealing both against the bolt and the surface of the lining. A new disk is threaded onto the anchor bolt on the front side of the lining, with or without an additional seal. A new nut is threaded onto the anchor bolt and is tightened in order to keep lining in place and locked position, but also to press the two disks on both side of the lining against each other and making the disks seal even tighter. Washers are installed between the nut and disk in order to distribute load and thereby prevent damages to the disks and the lining, but more important and necessarily to prevent damages to the seal and sealing properties, during tightening of the nut.

When working up under tunnel ceiling, enhanced handle of objects, reduced weight, and installation procedures are important. In order to keep the weight as low as possible, use of steel as such plates mentioned is not a contribution to such enhanced working environment and health, safety and environment. Another challenge is to keep the objects in place while installing further objects. Further, preventing objects from falling off/down and potentially cause injury to the operators and/or cause additional work are of essence.

Further, the steel disks, if not made of stainless steel, are to be coated with anti-corrosion coating preventing formation of rust. When handled during storing, transporting or mounting, the coating might be damaged, which will shorten the lifetime of the disks due to for example formation of corrosion.

The number of components has an impact both to cost, but also handling of such a number, causing drawbacks in many aspects. As mentioned above, the handling of such number of components in order to keep them in place while installing further objects, but also the aspect of picking the right component at the right time, is time consuming and the probability to make mistakes is high.

The anchor bolts are commonly installed in the tunnel or rock wall and ceiling in a grid pattern at for example a distance of 120 cm x 120 cm. The bolts have several functions. They are keeping the lining threaded outside disks at a correct distance from the tunnel/rock wall or ceiling around the entire tunnel profile and serves also as an attachment for the lining and reinforcement support for the concrete and the concrete itself, installed outside of the lining. A large number of anchor bolts is needed and a corresponding number of disks and thereby many man-hours for installation. The need of anchor bolts can reach a number of several hundred thousands in one single tunnel dependent upon length, width and height of the tunnel.

A disk is normally made of steel with a diameter of approximately 150 mm and a thickness of 3-4 mm, each with a weight around 0.4 kg and provides good resistance from load due to clamping forces, air pressure and pulling suction of passing trains, cars and heavy goods vehicles.

The lining used may be thin membrane or linings, but may also be foam plates typically at thicknesses of 20-90 mm. PE foam is widely used. When nuts are torqued and the disks are pressed against the foam, the foam will yield. Over time this will cause challenges, since PE does not have any "memories" and will not tend to recover its original shape or thickness when the compressive force is removed. Due to this fact there can be a need for periodically tightening the nuts before spraying on shotcrete or installing concrete elements, tension between the disks and the PE foam will gradually be reduced and the sealing properties will gradually cease, and thereby not function as intended.

### SUMMARY OF THE INVENTION

The principle used in the present invention is to depend on the sealing and flexible properties of the sealing material used while the material used and the shaper or configuration of the disc itself is to secure a sufficient rigidity in the sealing. This means that it is the compression of the sealing material that causes the sealing effect while the compressive forces required to provide the sealing effects are achieved by externally arranged system of nuts on the accessible side of the sheet to be fastened. Common features for the various embodiments of the discs are: a rigid, slightly concave/convex with a central hole; a sealing arrangement associated with the central hole for sealing against the bolt on which the disc is intended to be threaded; and a sealing arrangement arranged around the periphery of the discs on the side intended to face the sheet to be fixed. Another common feature is that the sealing inside the central hole is terminated inside the hole on the side intended to face the nuts, thus avoiding direct contact with the exterior nut or stop on the bolt,

Another general principle applicable to the various embodiments is the contact between the two discs and the pressure exerted by one disc to the other producing the sealing effect by pressing the end of the sealing surface against the other. The compression of the centrally arranged sealing devices is obtained by arranging the free end of the central sealing device to extend outside the curved arc on the concave side of the disc to come in contact with the corresponding free end surface of the central sealing device on the disc, arranged on the opposite side of the membrane or insulation mat. By forcing the outer disc, i.e. the disc on the free side of the membrane or insulation mat inwards towards the inner disc, a compressive force and effect will be formed in both central sealing devices, securing sealing at least between the inner disc and the corresponding bolt. In case a membrane is used, the contact between the free end of each sealing device will be direct, transferred through the thin membrane. In case of a compressible insulation mat with a certain thickness a hollow tube is arranged on the bolt between the two free ends of sealing devices, transferring the compressive force directly from the outer disc to the inner disc through said hollow tube, without causing an effect on the insulation in the region for the corresponding hole or penetration.

In the following, and throughout the specification, the following terms means:
- The term "lining" used in this specification means a membrane, an insulation sheet, a lining or similar type of installations. Bendable to follow the contour of the supporting surface to be protected or covered.
- The term "spacer" means a hollow tube shaped distance piece, preferably cylindrically shaped flat disc, a bushing or the like, suitable to be threaded on to a bolt..
- The term "disk material" means rigid material, suitable with or without ribs or the like to form a rigid disc, such as filled and unfilled engineering plastics and thermoplastics/polyolefin, including but not limited to PP, PE, PVC, and PA, composites or metals.
- The term "seal material" means an elastic material, suitable to be deformed when subjected to a pressure or compression, such as engineering plastics and thermoplastics/polyolefin, including but not limited to synthetic rubber such as thermoplastic elastomer, TPE, styrene ethylene butylene styrene, SEBS or thermoplastic olefin, TPO with a characteristic of being soft, elastic and thereby also deformable, and hold sealing properties when being deformed.
- The term "metal" means, include but not be limited to, steel, aluminium, light alloys or the like.

An object of the invention is to provide a system for fixing and supporting an element forming a temporary or permanent part of a tunnel wall or roof, preventing debris, water, ice or rock from falling down into a tunnel room or preventing or serving as a fire protection, or serving as an insulation preventing formation of ice on the wall or roof.

Another object of the present invention is to provide an improved disc improving the HSE aspects and eliminating, or at least reducing weight exposure during repeatedly installation work, in particular but not limited to above the head work during installation.

Yet another object of the invention is to reduce the number of elements that has to be handled and assembled in order to obtain a more efficient tunnel lining installation system.

Yet another object of the present invention is to improve in a simple manner the seal associated with the disc, enhancing the sealing effect of the disc both towards the supporting bolt and also towards the lining or insulation as such, preventing intrusion or leaked water through the lining in the bolt penetration regions or sidewise through the joint between the disc and the membrane/mat.

Another object of the invention is to provide elements for such system, such as a disk for mounting a water, frost and fire protecting material, such as a lining, to bolts anchored in rock wall or ceiling, in for example tunnels, and provide a water proof transition between bolts, disk and perforated holes in lining in which the lining is threaded on to the bolts.

Moreover it is an object of the present invention is to provide a disk that provides a robust and efficient sealing of the lining of a wall or ceiling of a tunnel or rock.

Another object of the present invention is to extend the lifetime of the disk with a material that cannot rust and will not be damaged due to handling and mounting.

Another object of the present invention is to provide a disk with an integrated sealing, eliminating separate mounting of the sealing, either in situ or at the supplier's yard.

Yet another object of the present invention is to provide a disk where the need of additional sealing components is eliminated.

Another object of the present invention is to provide a disk with better sealing against anchor bolts and lining.

Similarly, it is an object of the present invention is to provide a disk with better and long lasting sealing to anchor bolts and insulation sheet when installing PE foam

Another object of the present invention is to provide a disk where the need of a washer between the disk and the nut is eliminated.

Another object of the present invention is to provide a disk robust to heavy loads and/or a disc where the central sealing between the disc and bolt is prevented from coming in contact with the stop nut and/or the nut producing the compressive force on the joint or to be exposed to rotation.

Another object of the present invention is to provide a disk with reduced weight still maintaining good bending stiffness.

It is also an object of the present invention to provide a disk with an integrated sealing, formed by injection moulding in the one and same operation or in a two-step production operation.

Another object of the present invention is to provide a disk allowing a more efficient and cost effective production, thereby reducing the production costs for each specimen.

Yet another object of the present invention is to provide a disk allowing a more cost effective installation, also enhancing the health, environment and safety for the operators installing the lining.

Yet another object of the invention is to provide a system and a method where an insulation mat is not unnecessarily compressed in order to obtain a sealed support.

Another object of the present invention is to reduce labour time and reduce risk of operator while installing lining in walls and ceilings, in for example tunnels, through reduced weight on disks and through integrated component replacing several components and thereby ease handling of components.

The objects of the present invention are achieved by means of a disk as further defined by the independent claims, while embodiments, alternatives, modifications and variants are defined by the dependent claims.

In a first aspect, the present invention relates to a disk, as described in claim 1, for sealed attachment and support of a lining or insulation plate or mat to a supporting surface, such as wall and/or ceiling in a tunnel, the lining being intended to be fixed to the supporting surface by a number of bolts fixed in the supporting surface, fixed to the bolts by means of one or more discs and a seal each with a through hole, intended to be threaded onto the corresponding bolt and positioned on at least one side of the lining. The seal is characterized in that the seal forms an integrated unit with the disc, wherein the seal only protrude on one side of the disk intended to face towards the lining, where an inner seal for sealing towards the bolt may project, in axial direction, out(side) of an outer peripheral seal.

The seal integrated in the disk with an inner seal placed in the centre of the disk and an outer peripheral seal placed along the outer rim of the disk, where the seals being intended to face against the steel bolt and the lining.

The inner seal protruding out of sealing surface of the disk may be configured to be squeezed towards the surface to be sealed and against the bolt and into the bolt threads when activated, making a water tight transition to the bolt.

The outer peripheral is arranged around the outer rim or circumference of the disk on the surface intended to face towards the lining, and preferably is formed of a number of concentrically arranged ridges.

The outer peripheral seal is arranged around the outer rim or circumference of the disk on the surface intended to face towards the lining, and preferably may be formed of a concentrically arranged, rounded and semi-circular or semi-oval formed, rib at the circumference of the disk.

The outer peripheral seal may be integral with the inner seal and may be radial spreading as ribs from the inner seal towards a rib concentrically arranged around the outer rim of the circumference of the disk.

The outer peripheral seal may be integral with the inner seal and may be spread as radial spreading as ribs from the inner seal with crossing ribs in a crossing pattern like a waffle pattern extending to a rib concentrically arranged around the outer rim of the circumference of the disk.

The outer peripheral seal may be arranged with ribs spread in radial direction from the inner seal towards a concentrically arranged rounded, circular or oval formed, rib around the circumference of the disk, the outer seal further comprising ribs, preferably perpendicular to and at least one per rib in radial direction forming a crossing pattern.

The disk on the side opposite of the sealing surface may have several ridges spread in radial direction from centre hole, locking towards a stopping means, such as a nut when torqued against surface.

The inner seal may be terminated inside the centre hole on the side locking towards the stopping means and/or covered by the disk material to protect the seal from direct contact with the stopping means and/or the rotational motions of the stopping means.

On the side opposite the sealing surface, the disk may comprise ribs established throughout the circular surface of the disk in order to increase bending stiffness of the disk.

The seal may be squeezed into centre hole and deformed when pressed against the opposite seal or lining and sufficiently sealing bolt and into the bolt threads and the perforated hole in the lining in which the anchoring bolt is protruding through when lining is installed.

At the centre hole of the disk, the inner seal may comprise a chamfer on seal, sloped towards the centre hole and the seal surface facing the bolt, and an approximately horizontal surface on the bottom of the inner seal facing the lining.

The disk may be used on both side of the lining, assembled laterally reversed and secured by nuts tightened to press the disks and thereby the seals in the centre of the disk and on the outer rims of the disk on both side of lining toward each other in a water tight manner.

The main body of the disk may have a disk material, preferably of a plastic or a metallic material, while the disc in total, i.e. the disc with the integrated seal, may be made of two different materials/two component material, where disk material may preferably be of polypropylene, PP, high density polyethylene, HDPE, polyvinyl chloride PVC, polyamide/nylon, PA or aluminium and seal may preferably be made of synthetic rubber such as thermoplastic elastomer, TPE, styrene ethylene butylene styrene, SEBS or thermoplastic olefin, TPO.

The seal of the disk may preferably be made of a seal material with a shore preferably of 20 A to 90 A, preferably 50 A, but more preferably of 30 A within the shore A hardness scale.

The disk with the integrated seal may be injection moulded in a two-cavity mould for a multi-component injection moulding process.

The disk with the integrated seal may be made in a one-step or a two-step process, where the disk initially may be pressed or moulded in a first step and thereafter placed in an injection moulding machine for injection moulding of the seal onto the metal.

A method for installation of the disk on a lining is characterized in comprising the steps:
- a disk, with its seal turning outwards, may be threaded onto an anchor bolt until meeting a preinstalled stopping means on the anchor bolt, preferably a nut, at a predetermined distance from the tunnel wall,
- the lining may be threaded at perforations in lining onto the anchor bolt facing the seal side of the disk,
- another disk, with its seal turning inwards towards the lining, the opposite way of the disk firstly installed may be threaded on to the anchor bolt, facing with its seal side against the lining,
- a stopping means, preferably a nut, may be threaded onto the anchor bolt, tightening the disks on both side of the lining towards each other, the two opposite inner seals pressing face to face or pressing at each side of the lining in order to deform the seal and thereby squeezing the inner seals towards the bolt making a watertight transition to the bolt.

When the disk is installed on a PE-foam lining and wherein a spacer may be installed in perforated hole in the PE-foam lining prior to installation of the disk or it may be pushed through the PE-foam lining by force, where the inner seal of each disk may squeezed toward the end surfaces of the spacer in order to deform the inner seal making a watertight transition to the bolt.

One method for manufacturing of the disk in an injection moulding process by use of at least one injection moulding machine where the main body of the disk is overmoulded by the TPE, SEBS or TPO material. The injection moulding process may be characterized in either a one-step or two-step process.

The method for manufacturing of the disk through a one step injection moulding process which may comprise the use of an injection moulding machine with two injection units where the TPE, SEBS or TPO may be overmoulded directly onto PP, HDPE, PVC or PA later or immediately after PP, HDPE, PVC or PA has been moulded, with the same injection moulding machine where firstly the PP, HDPE, PVS or PA may have been injected into an initial mould and then the TPE, SEBS or TPO may have been injected into a another mould placed on top of the initial mould by rotating a core mould.

The method for manufacturing of the disk in a two-step process may comprise the steps:
- a step where the main body of the disk in a first machine may either be moulded by a first injection moulding machine or pressed by metalworking,
- a further step of transferring the main body of the disk into the mould of the second machine for injection moulding, where the TPE, SEBS or TPO may be overmoulded directly onto the main body of the disk.

The seal is sufficiently sealing the perforated hole in the material for water and frost protection in which the anchoring bolt is protruding through after installation of water and frost protecting material.

The disk is for securing a water and frost tight barrier at perforation in the lining while fixing a lining to a wall or ceiling of a tunnel where the lining is threaded onto anchor bolts and where disks act as the water and frost tight sealing of the lining and bolt. The disk is installed at a predetermined distance from the tunnel walls or ceilings, and the disks are threaded onto a number of anchor bolt, preferably threaded bolts, which is bolted to the tunnel walls or ceilings, the disks stops at a predefined distance of the tunnel walls or ceilings at a preinstalled stopping means, which can be a nut, the seal turning outwards. The lining is thereafter threaded at perforations in lining onto the anchoring bolts, which is preferably spreading at a distance from each other throughout the tunnel, new disks are threaded onto the bolts, the opposite way of the disks firstly installed, a new stopping mean, which can be a nut, is threaded onto the bolts and tightens the disks on both side of the lining towards each other. The more it is tightened the better sealing effect, the seal in the centre of the disk is being squeezed inwards and embraces the anchoring bolt tighter and tighter and the seal in the disk circumferences gains tighter and tighter contact with the lining with increased pressure on disk from the torqued nut.

According to the present invention, the means for sealing off the lining also serves as a securing element securing the water and frost proofing lining to the tunnel or rock wall or ceiling at a predefined distance to the tunnel or rock wall or ceiling.

According to the present invention, the disk is provided with ribs for stiffening purposes in order for the disk to be able to withstand heavy loads.

The discs and the method according to the present invention provides a lighter disc of a plastic material with integrated sealing, where the integrated sealing is formed in the same moulding operation and by the same tool as the moulding of the disc.

Both costs associated with the manufacture and installation process are reduced, due to the integrated sealing as part of the moulding of the disc and due to elimination of components related to the integrated seal in disk, which leads to easier and more efficient handling at tunnel site.

Due to the integrated sealing, the discs also provide a more reliable sealing effect with reduced exposure for a leakage between the sealing, the disc and the rock bolt.

The disk with the integrated seal is made of two different materials one stiff material to keep the strength and the shape and one material to function as a seal. The stiff material can be thermoformed or compressing moulded of for example polypropylene, PP, high density poly ethylene, HDPE, polyvinyl chloride, PVC or polyamide/nylon PA and the seal material can be synthetic rubber such as thermoplastic elastomer, TPE, styrene ethylene butylene styrene, SEBS, or thermoplastic olefin, TPO. The stiff material can also be a filled material with for example glass to gain extra stiffness. It can also be filled with flame retardant to prevent from burning. The sealing, of for example TPE, SEBS or TPO, has a hardness in the shore A hardness scale within the area of 20-90 A, preferably with a shore 50 A, and more preferably with a shore 30 A may be preferably. Different shore on inner and outer sealing might be preferred, and then preferably with a lower shore on the inner sealing.

The health, safety and environmental aspect is also improved due to the reduced weight of each disc compared with a steel disc.

The challenge with the PE foam, where the tension between the disk and lining will be loosening, can be solved by applying a spacer in the perforated hole in the PE foam, thereby reducing the compressive effect on the insulation foam in itself. This secures a solid sealing face towards the seal in area of the anchoring bolt, and thereby secure sealing.

The disk can also be applied outside rocky walls where bolts is rigidly fixed in order to secure bits of rocks from falling out either because of unfixed rocks or where water intrusions makes conditions where bits of rocks loosen. Disks are then used to prevent water additional intrusion along the anchoring bolt.

The disk manufactured in either a one step injection moulding process or in a two-step injection moulding process, where the two step injection moulding process is using two injection moulding machines where the disk material is moulded in a first machine and where the component of disk material are transferred into the mould of a second machine and then overmoulded by the seal material. And the one step injection moulding process is using one injection moulding machine with two injection units where the seal material is overmoulded directly onto the disk material (filled and unfilled engineering plastics and thermoplastics/polyolefin and composites) immediately after the disk material has been moulded, in the same mould, and with the same injection moulding machine where firstly the disk material is injected into an initial mould and secondly the seal material is injected into a secondary mould placed on top of the initial mould by rotating a core mould. The one step injection moulding process, also known as 2-Shot-, multi-component-, in-mould-, twin shot- or assembly injection moulding process creates a strong, tight seal without the need for additional components and is a preferred manufacturing method for products where water-tightness is required.

### BRIEF DESCRIPTION OF THE DRAWINGS

Embodiments of the present invention will now be described, by way of example only, with reference to the following diagrams wherein:
Figure 1 shows schematically a cross section of an illustration of prior art.
Figure 2 shows schematically a cross section through a tunnel, prior to further reinforcement and shotcreting/concreting or installing concrete elements, indicating a lining, a plurality of anchoring bolts and disks for sealing.
Figure 3 shows a cross section of detail A from figure 2, showing the present invention assembled with the lining in a tunnel.
Figure 4 shows a cross section of detail A from figure 2, showing the present invention assembled with the lining in a tunnel, where the lining is a thick PE-foam with a spacer through a perforation in the foam.
Figure 5 shows a perspective view of one embodiment of a disk of the present invention.
Figure 6 shows a tilted perspective view of figure 5 of one embodiment of the sealing side of the disk.
Figure 7 shows a cross section A-A of one embodiment of a disk of the present invention.
Figure 8 shows a top view of one embodiment of a disk of the present invention indicating the cross section A-A in figure 7.
Figure 9 shows a detail B from figure 7 of the centre part of the seal.
Figure 10 shows a side view of two disks of the present invention.
Figure 11 shows a tilted perspective view of figure 5 of one embodiment of the sealing side of the disk.
Figure 12 shows a cross section A-A derived from figure 8 of the embodiment of figure 11.
Figure 13 shows a detail C from figure 12 of the centre part of the seal.

### DETAILED DESCRIPTION OF PREFERRED EMBODIMENTS DISCLOSED IN THE DRAWINGS

The following description of the exemplary embodiments refers to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures, or characteristics may be combined in any suitable manner in one or more embodiments.

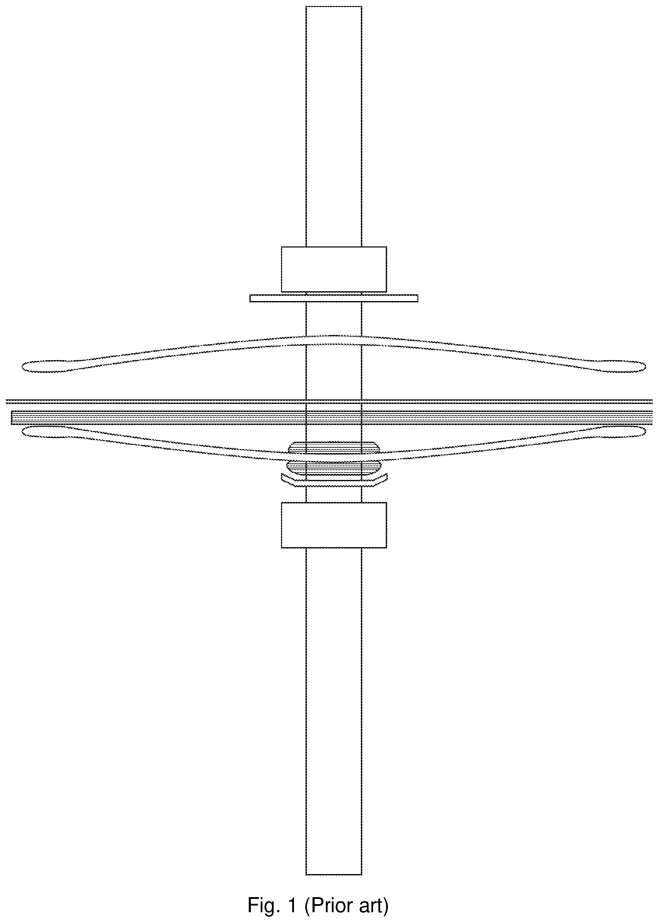

Figure 1 shows schematically a cross section of an assembly of prior art. A bolt to be anchored to the tunnel wall, a nut at a predefined distance from the tunnel wall which act as a stopping means for the lining, a washer between the nut and a seal preinstalled or retrofitted in the centre hole of the sealing disk, a sealing sheet at least covering the disk area between the disk with the seal and the lining, a new disk, with or without seal outside the lining a washer between the outer disk and the nut which is torqued in order to the disks against the lining and make a water proof transition between the anchoring bolt and lining. The washers are required in order to prevent damages to the seals, and thereby the sealing properties, and disks when torqued against the nut.

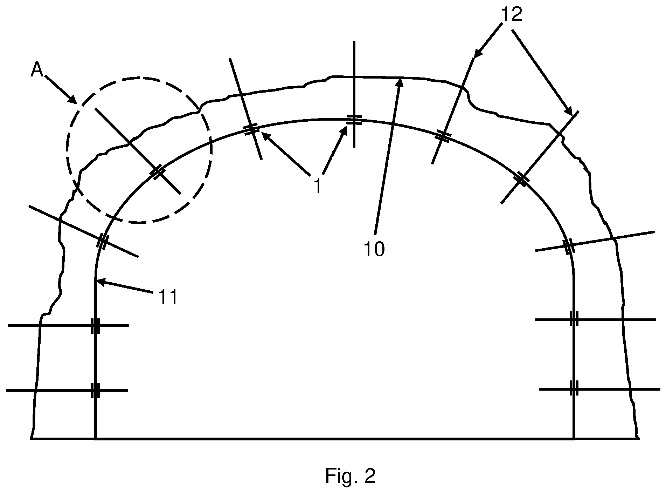

Figure 2 shows schematically a cross section through a tunnel, prior to further reinforcement and shotcreting or installing concrete elements, indicating a lining 11, a plurality of anchoring bolts 12 and disks 1 for sealing. As indicated, a plurality of anchoring bolts 12 is drilled into the surrounding rock and penetrating the lining 11. In order to secure water tightness, the penetration may be sealed, and conventional sealing material with load distributing disks 1 may be used. The lining 11 may be of flexible and bendable sheets extending for example as a unit following the entire profile shape of the tunnel. In the longitudinal direction of the tunnel, sections of transversely extending lining 11 sheets may be arranged in an overlapping pattern. The lining 11 may also be of thick PE foam with thicknesses from 20-90 mm.

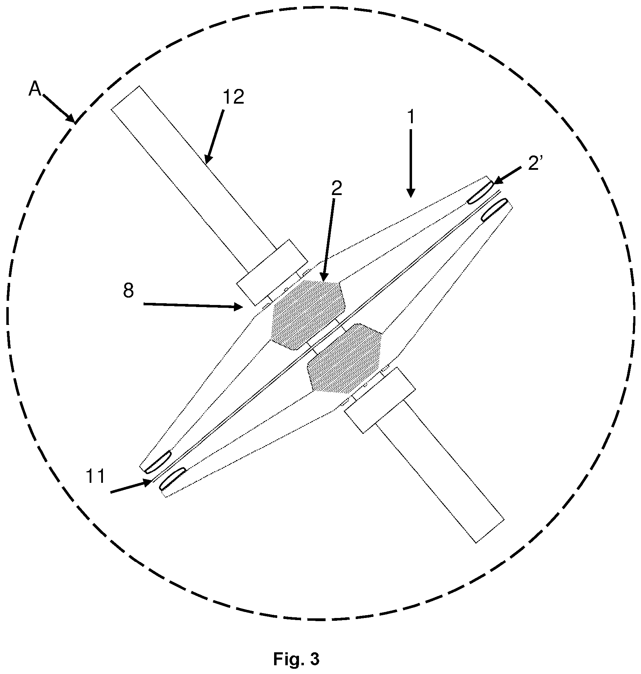

Figure 3 shows a cross section of detail A from figure 2, showing the present invention assembled with the lining in a tunnel wall 10. A bolt 12 may be anchored to the tunnel wall 12, a stopping means, which might be a nut 8, may be installed at a predefined distance from the tunnel wall 10 which may act as a stopping means keeping the lining 11 at a desired distance from the tunnel wall 10, the disk 1 with the integrated seal 2, 2', with the seal 2, 2' facing outwards, then the lining 11 may be threaded outside the disk 1, a new disk 1 may be installed by threading onto the bolt 12 outside the lining 11, the opposite way of the disk 1 firstly installed, a new nut 8 may be threaded onto the bolt 12 and may be tightened in order to press the disks 1 on both side of the lining 11 towards each other, and thereby pressing the seal 2, 2' to squeeze the sealing. An inner seal 2 arranged in the centre of the disk 1 may be pressed to squeeze against the bolt 12, securing a water proof transition along the bolt 12. And an outer seal 2' arranged around the outer rim of the disk 1 may be squeezed towards the lining 11 securing a water proof transition in the interfaces exposed to possible and unwanted water.

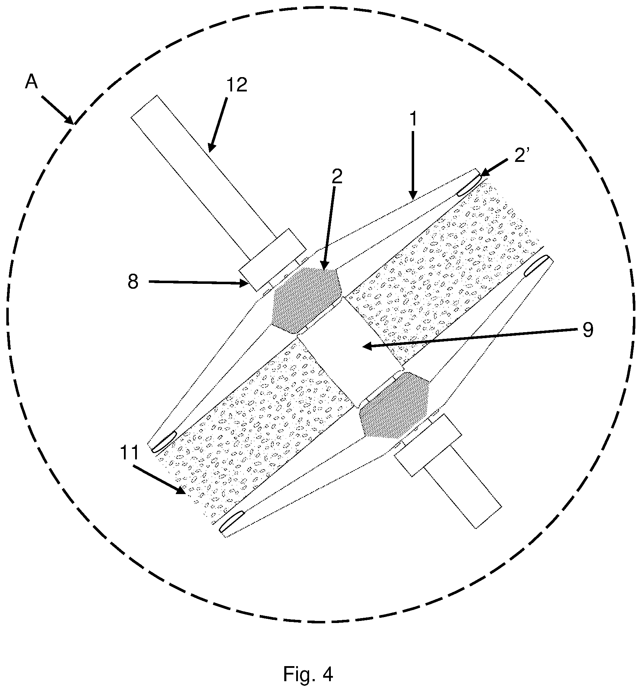

Figure 4 shows a cross section of detail A from figure 2, showing the present invention assembled with the lining 11 in a tunnel wall 10, where the lining may be a thick PE-foam with an optional spacer 9 through a perforation in the foam. The principle is the same as indicated in figure 3, but because the foam is a flexible material, that will yield when being pressurized; a spacer 9 installed in the perforation of the lining 11 where the lining 11 is threaded onto the anchor bolt 12. The spacer 9 may function as a resistance for the disk's 1 inner sealing 2 in order to be able to be squeezed against a solid surface and thereby the inner seal 2 may be deformed to squeeze against the bolt 12 and bolt threads making a water proof transition. A chamfer on both sides of the spacer 9, inclining towards the centre axis of the thorough hole of the spacer 9, makes the seal 2 being squeezed into the spacer 9 and towards the bolt 12 while being pressurized by the torqued nuts 8, and also seals the thorough hole of the spacer 9. When using PE-foam as lining, the disks (1) may preferably use a spacer 9, in order to press the seal 2 against the bolt 12 and thereby the threads of the bolt 12.

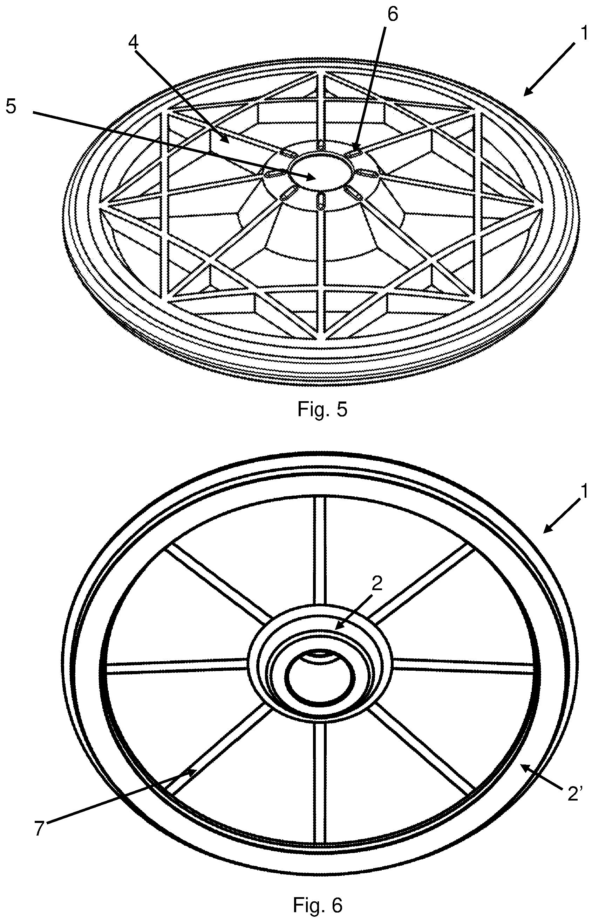

Figure 5 shows a perspective view of one embodiment of a disk 1 of the present invention, the disk 1 shown from above, the opposite side of the sealing side of the disk. The disk may comprise ribs 4, which may both stiffen and reduce weight of the disk 1,. The disk may further comprise a number of ridges 6 spread in radial direction from centre hole 5 as shown to firstly prevent minimum friction to the nut 8 when turning the nut 8 and may thereafter lock towards the nut 8 through deformation of the ridges 6 when torqued against surface, and thereby may replace the washers shown in prior art.

Figure 6 shows a tilted perspective view of figure 5, of one embodiment of the disk seen from below, and constitutes the sealing side of the disk. The inner seal 2 is shown in centre of the disk, with flow channels 7 where which the sealing material may flow during injection moulding from the inner seal 2 towards the outer rim of the disk forming the outer seal 2', around the outer rim of the disk. The outer seal 2' which may be spread from the inner seal 2 to the outer rim of the disk 1 is of importance in order to be able to further secure a water tight transition between lining 11 and the disk 1, and also to take water leakages from the perforated hole, because size of perforated hole in lining might vary.

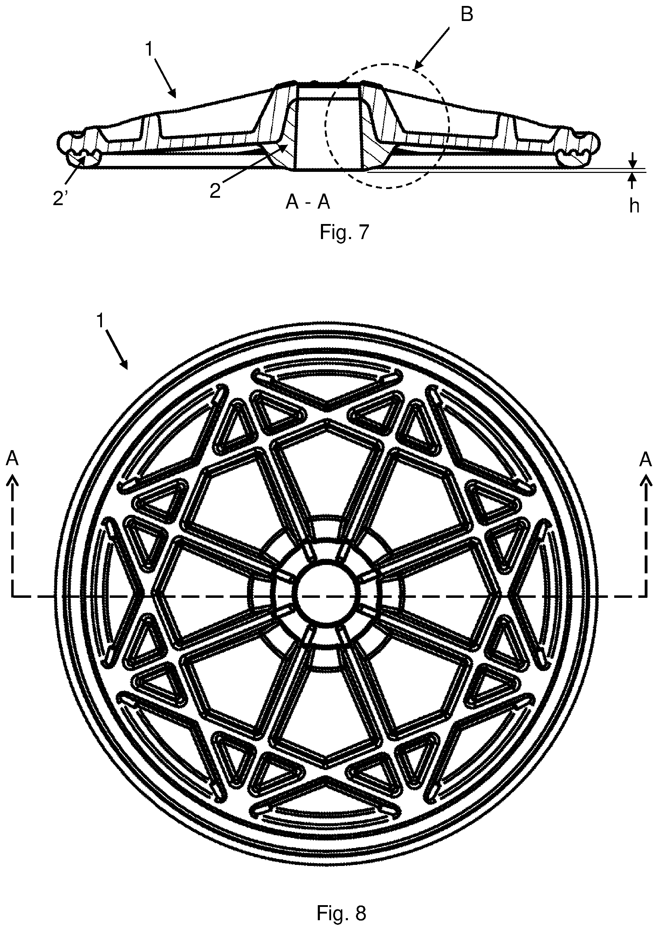

Figure 7 shows a cross section A-A of one embodiment of a disk 1 of the present invention. The disk 1 and the seal 2, 2' which may form an integrated part are separately indicated. The seal 2, 2' is shown in the figure to be continuously from centre hole 5 to the outer rim of the disk 1. The seal profile of the part of the outer seal 2' concentrically arranged around the circumference of the disk 1 may be semi-circular or semi-oval or may comprise of a number of ridges (not shown). A preferred height difference h, as indicated in figure 7, between the inner seal 2 and outer peripheral seal 2' may be comprised in order to at least secure a watertight sealing between the inner seal 2 and the bolt 12 independently of sealing between the outer peripheral seal 2' and the lining 11.

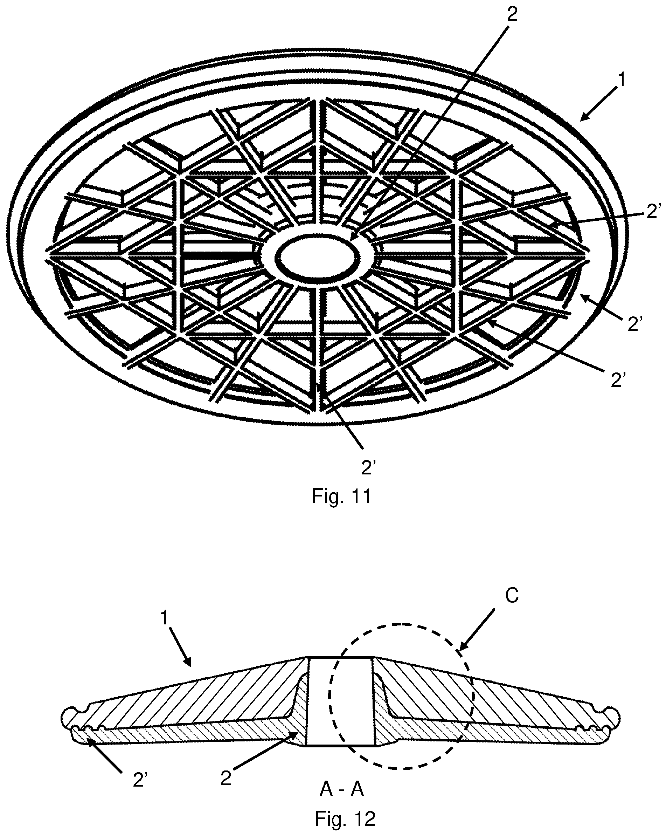

Figure 8 shows a top view of one embodiment of a disk 1 of the present invention indicating the cross section A-A shown in two different embodiments of figure 7 and figure 12.

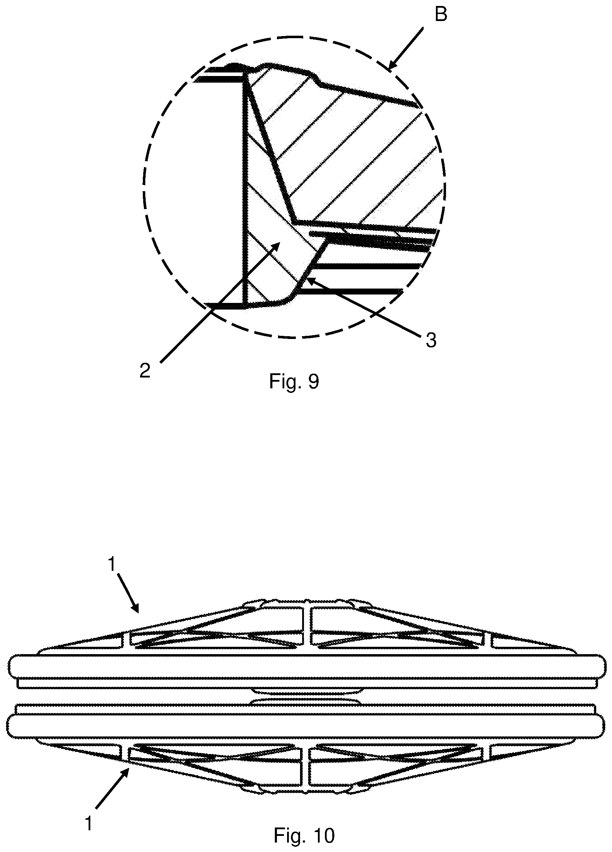

Figure 9 shows a detail B from figure 7 of the inner seal 2. The inner seal 2 shows a chamfer on seal 3, where the chamfer on seal 3 is preferably on the outer surface of the inner seal 2, inclining towards the centre hole 5 of the disk 1, making it gradually thinner to the bottom of the sealing surface of the disk in order to make it softer and thereby ease the squeezing of the material inwards towards the bolt 12 when being pressurized. An approximately horizontal surface on the bottom of the inner seal 2 facing the lining 11 is also shown; making a bigger contact area for the inner seal 2 facing either lining 11 or the inner seal 2 of the opposite disk 1, dependent on the size of perforated hole in lining 11.

Figure 10 shows a side view of two disks 1 of the present invention, as it preferably may be placed opposite each other with the lining 11 between.

Figure 11 shows a tilted perspective view of figure 5 of another embodiment of the disk seen from below, constituting the sealing side of the disk. The inner seal 2 is shown in the centre of the disk, The outer peripheral seal 2' is shown as a cross pattern towards a concentrically arranged rib around the circumference of the disk 1, where the concentrically arranged rib around the circumference of the disk 1 may be a semi-circular or semi-oval formed continuous rib or the concentrically arranged rib around the circumference of the disk 1 may comprise of a number of concentrically arranged ridges. The cross pattern may comprise of ribs spread in radial direction from the inner rib 2 towards the concentrically arranged rib at the circumference of the disk 1 and may further comprise ribs, preferably perpendicular to and at least one per rib in radial direction forming a crossing pattern between the inner seal 2 and the rib arranged around the circumference of the disk 1 on the sealing side 7 of the disk 1.

Figure 12 shows a cross section A-A derived from figure 8 of the embodiment of figure 11. The disk 1 and the seal 2, 2' which may form an integrated part are separately indicated. The seal 2, 2' is shown in the figure to be continuously from centre hole 5 to the outer rim of the disk. The seal profile of the part of the outer seal 2' may be spread from the inner seal 2 towards a concentrically arranged preferably semi-circular or semi-oval rib or a number of ridges around the circumference of the disk 1. The flow channels 7 (not shown) is preferably placed below the ribs of the outer peripheral seal 2' spread in radial direction from the inner seal 2. The outer seal 2' will preferably be in flush over its sealing surface.

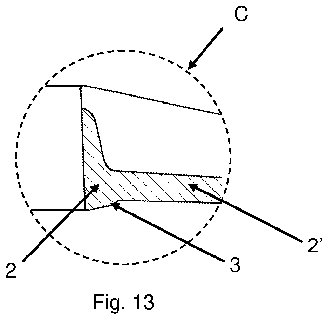

Figure 13 shows a detail C from figure 12 of the inner seal 2. The inner seal 2 shows a chamfer on seal 3, where the chamfer on seal 3 is preferably on the outer surface of the inner seal 2, inclining towards the centre hole 5 of the disk 1, making it gradually thinner to the bottom of the sealing surface of the disk in order to make it softer and thereby ease the squeezing of the material inwards towards the bolt 12 when being pressurized. An approximately horizontal surface on the bottom of the inner seal 2 facing the lining 11 is also shown; making a bigger contact area for the inner seal 2 facing either lining 11 or the inner seal 2 of the opposite disk 1, dependent on the size of perforated hole in lining 11.

In all embodiments of the present invention the inner seal 2, at the side of the disk to be torqued against the stopping means, the nut 8, on the opposite side of the sealing surface, may be covered by the disk 1, and may preferably not seen from the top of the disk. This is to prevent damage to the seal when disk may be torqued against the stopping means and thus prevent minimum friction to the nut 8. The ridges 6, as described in figure 5, may further prevent minimum friction and locking towards the nut 8.

In all of the embodiments of the present invention, where the main body of the disk 1 is made of disk material and the seal 2, 2' is made of a seal material. The seal material may have a shore within the shore A hardness scale and preferably with a shore 30A, but might also be of shore 50 A, and at least within a shore of 20-80 A. Different shore on inner and outer part of sealing might be preferred, and then preferably with a lower shore of the inner sealing than the outer sealing.

In all of the embodiments of the present invention, the inner seal 2 may preferably protrude slightly further out of the sealing side of the disk than the outer peripheral seal 2', as indicated as a preferred height difference h in figure 7, in order to at least secure a watertight sealing between the inner seal 2 and the bolt 12 independently of the sealing between the outer peripheral seal 2' and the lining 11. The height difference between the inner seal 2 and the outer peripheral seal 2' will preferably be in the range of 1-5 mm, more preferably in the range of 1-3 and most preferably 2 mm.

| Component | Description |
|---|---|
| 1 | Disk |
| 2 | Inner seal |
| 2' | Outer peripheral seal |
| 3 | Chamfer on seal |
| 4 | Rib |
| 5 | Centre hole |
| 6 | Ridge |
| 7 | Flow channels |
| 8 | Nut |
| 9 | Spacer |
| 10 | Tunnel wall |
| 11 | Lining |
| 12 | Bolt |

## Claims

1. Disk (1) for sealed attachment and support of a lining or insulation plate or mat (11) to a supporting surface, being a wall and/or ceiling in a tunnel (10), the lining (11) being intended to be fixed to the supporting surface by a number of bolts (12) fixed in the supporting surface, fixed to the bolts (12) by means of one or more discs (1) and a seal (2, 2') providing locking and sealing surface around the bolt (12) and the perforation of the lining (11), each with a through hole, intended to be threaded onto the corresponding bolt (12) and positioned on at least one side of the lining (11) wherein the seal (2, 2') faces against the bolt and lining in use and forms an integrated unit with the disc (1), wherein the seal comprises an outer peripheral seal (2') arranged along the outer rim of the disc for facing the lining and an inner seal (2) placed at the center of the disk (1) for sealing towards the bolt (12) **characterized in that**, the seal (2,2') only protrudes on one side of the disk (1) intended to face towards the lining (11) and **in that** the inner seal (2) projects, in an axial direction, out(side) of the outer peripheral seal (2') and which comprises an approximately horizontal bottom surface configured to press against a facing surface in use.

2. Disk (1) according to claim 1,
wherein the inner seal (2) protruding out of sealing surface of the disk (1) is configured to be squeezed towards the surface to be sealed and against the bolt (12) and into the bolt threads when activated, making a watertight transition to the bolt (12).

3. Disk (1) according to one of the claims 1 to 2,
wherein the peripheral seal (2') arranged around the outer rim or circumference of the disk (1) on the surface is intended to face towards the lining (11), and is preferably formed of a number of concentrically arranged ridges.

4. Disk (1) according to one of the claims 1 to 2,
wherein the peripheral seal (2') arranged around the outer rim or circumference of the disk (1) on the surface intended to face towards the lining (11) is formed of a concentrically arranged, rounded and semi-circular or semi-oval formed, rib at the circumference of the disk (1).

5. Disk (1) according to claim 2 or 3,
wherein the outer peripheral seal (2') is integral with the inner seal (2) and radial spreading as ribs from the inner seal (2) towards a rib concentrically arranged around the outer rim of the circumference of the disk (1), or
wherein the outer peripheral seal (2') is integral with the inner seal (2) and is spread as radial spreading as ribs from the inner seal (2) with crossing ribs in a crossing pattern like a waffle pattern extending to a rib concentrically arranged around the outer rim of the circumference of the disk (1), or
wherein the outer peripheral seal (2') is arranged with ribs spread in radial direction from the inner seal (2) towards a concentrically arranged rounded, circular or oval formed, rib around the circumference of the disk (1), the outer seal (2') further comprises ribs, preferably perpendicular to and at least one per rib in radial direction forming a crossing pattern.

6. Disk (1) according to one of the claims 1 to 5,
wherein the disk (1), on the side opposite the sealing surface, is having several ridges (6), spread in radial direction from centre hole (5), locking towards a stopping means, such as a nut (8), when torqued against surface and wherein the inner seal (2) is terminated inside the centre hole (5) on the side locking towards the stopping means and/or thus is protected by the rigid disk (1) material to protect the seal from direct contact with the stopping means and/or the rotational motions of the stopping means, and
wherein the disk (1), on the side opposite the sealing surface, comprises ribs (4) established throughout the circular surface of the disk (1) in order to increase bending stiffness of the disk (1).

7. Disk (1) according to one of the claims 1 to 6,
wherein the seal (2, 2') is being squeezed in to centre hole (5) and is being deformed when pressed against the opposite seal or lining and sufficiently sealing bolt (12) and into the bolt threads and the perforated hole in the lining in which the anchoring bolt (12) is protruding through when lining (11) is installed.

8. Disk (1) according to one of the claims 1 to 7,
wherein the inner seal (2) at the centre hole (5) of the disk (1) comprises a chamfer on seal (3), sloped towards the centre hole (5) and the seal surface facing the bolt (12).

9. Disk (1) according to claim 1 to 8
wherein the disk (1) is used on both side of the lining (11), assembled laterally reversed and secured by nuts (8) tightened to press the disks (1) and thereby the seals (2, 2') in the centre of the disk and on the outer rims of the disk (1) on both side of lining (11) toward each other in a watertight manner.

10. Disk (1) according to claim 1 to 9
wherein the main body of the disk (1) is made in a plastic or metallic material, while the disk (1) in total, i.e. the disk with the integrated seal (2, 2') is made of two different materials/two component material, preferably polypropylene, PP, high density polyethylene, HDPE, polyvinyl chloride, PVC, polyamide/nylon, PA or aluminium and synthetic rubber such as thermoplastic elastomer, TPE, styrene ethylene butylene styrene, SEBS or thermoplastic olefin, TPO.

11. Method for installation of disk (1) of one the claims 1-10 on a lining (11), **characterized in** comprising the steps:
- a disk (1) according to any of claims 1 to 10, with its seal turning outwards, is threaded onto an anchor bolt (12) until meeting a preinstalled stopping means on the anchor bolt (12), preferably a nut (8), at a predetermined distance from the tunnel wall,
- the lining (11) is threaded at perforations in lining (11) onto the anchor bolt (12) facing the seal side of the disk (1),
- another disk (1), with it's seal turning inwards towards the lining (11), the opposite way of the disk (1) firstly installed are threaded on to the anchor bolt (12), facing with its seal side against the lining (11),
- a stopping means, preferably a nut (8), is threaded onto the anchor bolt (12), tightening the disks (1) on both side of the lining (11) towards each other, the two opposite inner seals (2) pressing face to face or pressing at each side of the lining (11) in order to deform the seal and thereby squeezing the inner seals (2) towards the bolt (12) making a watertight transition to the bolt (12).

12. Method for installation of disk (1) according to claim 11, wherein the lining (11) is a PE-foam lining (11) and wherein a spacer (9) is installed in perforated hole in the PE-foam lining (11) prior to installation of the disk (1) or it is pushed through the PE-foam lining (11) by force where the inner seal (2) of each disk (1) is being squeezed toward the end surfaces of the spacer (9) in order to deform the inner seal (2) making a watertight transition to the bolt (12).

13. Method for manufacturing of the disk (1) of one of the claims 1-10 in an injection moulding process by use of at least one injection moulding machine where the main body of the disk (1) is overmoulded by the TPE, SEBS or TPO material **characterized in that** the injection moulding process is either a one-step or two-step process.

14. Method for manufacturing of the disk (1) according to claim 13, wherein the one step injection moulding process comprises the use of an injection moulding machine with two injection units where the TPE, SEBS or TPO is overmoulded directly onto the PP, HDPE, PVC or PA later or immediately after the PP, HDPE, PVC or PA has been moulded, with the same injection moulding machine where firstly the PP, HDPE, PVC or PA is injected into an initial mould and secondly the TPE, SEBS or TPO is injected into a secondary mould placed on top of the initial mould by rotating a core mould.

15. Method for manufacturing of the disk (1) according to claim 13, wherein the two-step process comprises the steps:
- a step where the main body of the disk (1) in a first machine is either moulded by a first injection moulding machine or pressed by metalworking,
- a further step of transferring the main body of the disk (1) into the mould of the second machine for injection moulding, where the TPE, SEBS or TPO is overmoulded directly onto the main body of the disk (1).

## Patentansprüche

1. Scheibe (1) zum dichten Anbringen und Halten einer Auskleidung oder Isolierplatte oder -matte (11) an einer Halterungsfläche, die eine Wand und/oder eine Decke in einem Tunnel (10) ist, wobei die Auskleidung (11) dazu bestimmt ist, durch eine Anzahl von in der Halterungsfläche befestigten Bolzen (12) an der Halterungsfläche befestigt zu werden, die mittels einer oder mehrerer Scheiben (1) und einer Dichtung (2, 2') an den Bolzen (12) befestigt ist, die eine Verriegelungs- und Dichtungsfläche um den Bolzen (12) und die Perforation der Auskleidung (11) bereitstellt, jeweils mit einem Durchgangsloch aufweist, das dazu bestimmt ist, auf den entsprechenden Bolzen (12) geschraubt und auf mindestens einer Seite der Auskleidung (11) positioniert zu werden, wobei die Dichtung (2, 2') im Gebrauch dem Bolzen und der Auskleidung zugewandt ist und eine integrierte Einheit mit der Scheibe (1) bildet, wobei die Dichtung eine äußere Umfangsdichtung (2'), die entlang des äußeren Rands der Scheibe angeordnet ist, um der Auskleidung zugewandt zu sein, und eine innere Dichtung (2), die in der Mitte der Scheibe (1) angeordnet ist, um zu dem Bolzen (12) hin abzudichten, umfasst **dadurch gekennzeichnet, dass** die Dichtung (2, 2') nur auf einer Seite der Scheibe (1) hervorsteht, die dazu bestimmt ist, der Auskleidung (11) zugewandt zu sein, und dass die innere Dichtung (2) in einer axialen Richtung aus der äußeren Umfangsdichtung (2') hervorsteht und eine annähernd horizontale Bodenfläche aufweist, die konfiguriert ist, um im Gebrauch gegen eine zugewandte Fläche zu drücken.

2. Scheibe (1) nach Anspruch 1,
wobei die innere Dichtung (2), die aus der Dichtungsfläche der Scheibe (1) hervorsteht, konfiguriert ist, um bei Aktivierung in Richtung der abzudichtenden Fläche und gegen den Bolzen (12) und in das Bolzengewinde gequetscht zu werden, wodurch ein wasserdichter Übergang zu dem Bolzen (12) hergestellt wird.

3. Scheibe (1) nach einem der Ansprüche 1 bis 2,
wobei die Umfangsdichtung (2'), die um den äußeren Rand oder Umfang der Scheibe (1) auf der Oberfläche angeordnet ist, dazu bestimmt ist, der Auskleidung (11) zugewandt zu sein, und vorzugsweise aus einer Anzahl von konzentrisch angeordneten Rippen gebildet ist.

4. Scheibe (1) nach einem der Ansprüche 1 bis 2,
wobei die Umfangsdichtung (2'), die um den äußeren Rand oder Umfang der Scheibe (1) auf der Oberfläche angeordnet ist, die der Auskleidung (11) zugewandt sein soll, aus einer konzentrisch angeordneten, abgerundeten und halbkreisförmig oder halboval geformten Rippe am Umfang der Scheibe (1) gebildet ist.

5. Scheibe (1) nach Anspruch 2 oder 3,
wobei die äußere Umfangsdichtung (2') mit der Innendichtung (2) einstückig ist und sich radial als Rippen von der inneren Dichtung (2) zu einer konzentrisch um den äußeren Rand des Umfangs der Scheibe (1) angeordneten Rippe ausbreitet, oder
wobei die äußere Umfangsdichtung (2') mit der Innendichtung (2) einstückig ist und als radiale Spreizung als Rippen von der inneren Dichtung (2) mit sich kreuzenden Rippen in einem Kreuzungsmuster wie ein Waffelmuster, das sich zu einer Rippe erstreckt, die konzentrisch um den äußeren Rand des Umfangs der Scheibe (1) angeordnet ist, gespreizt ist, oder
wobei die äußere Umfangsdichtung (2') mit Rippen angeordnet ist, die sich in radialer Richtung von der inneren Dichtung (2) zu einer konzentrisch angeordneten, abgerundeten, kreisförmig oder oval geformten Rippe um den Umfang der Scheibe (1) erstrecken, die äußere Dichtung (2') ferner Rippen umfasst, die vorzugsweise senkrecht dazu sind und mindestens eine pro Rippe in radialer Richtung, die ein Kreuzungsmuster bilden.

6. Scheibe (1) nach einem der Ansprüche 1 bis 5,
wobei die Scheibe (1) auf der der Dichtungsfläche gegenüberliegenden Seite mehrere Grate (6) aufweist, die sich in radialer Richtung von dem mittleren Loch (5) ausbreiten und in Richtung einer Anschlageinrichtung, wie beispielsweise einer Mutter (8), blockieren, wenn sie gegen die Oberfläche gedreht werden, und wobei die innere Dichtung (2) im Inneren des mittleren Lochs (5) auf der dem Anschlageinrichtung zugewandten Seite endet und/oder somit durch das Material der starren Scheibe (1) geschützt ist, um die Dichtung vor direktem Kontakt mit der Anschlageinrichtung und/oder den Drehbewegungen der Anschlageinrichtung zu schützen, und wobei die Scheibe (1) auf der der Dichtungsfläche gegenüberliegenden Seite Rippen (4) umfasst, die in der gesamten kreisförmigen Fläche der Scheibe (1) gebildet sind, um die Biegesteifigkeit der Scheibe (1) zu erhöhen.

7. Scheibe (1) nach einem der Ansprüche 1 bis 6,
wobei die Dichtung (2, 2') in das mittlere Loch (5) gequetscht und verformt wird, wenn sie gegen die gegenüberliegende Dichtung oder Auskleidung und den ausreichend abdichtenden Bolzen (12) und in die Bolzengewinde und das perforierte Loch in der Auskleidung gedrückt wird, in das der Ankerbolzen (12) hervorsteht, wenn die Auskleidung (11) installiert ist.

8. Scheibe (1) nach einem der Ansprüche 1 bis 7,
wobei die innere Dichtung (2) an dem mittleren Loch (5) der Scheibe (1) eine Fase an der Dichtung (3) umfasst, die zu dem mittleren Loch (5) hin geneigt ist und die Dichtungsfläche dem Bolzen (12) zugewandt ist.

9. Scheibe (1) nach einem der Ansprüche 1 bis 8 wobei die Scheibe (1) auf beiden Seiten der Auskleidung (11) verwendet wird, seitlich umgekehrt zusammengesetzt und durch Muttern (8) gesichert wird, um die Scheiben (1) und dadurch die Dichtungen (2, 2') in der Mitte der Scheibe und an den äußeren Rändern der Scheibe (1) auf beiden Seiten der Auskleidung (11) wasserdicht aufeinander zu drücken.

10. Scheibe (1) nach einem der Ansprüche 1 bis 9
wobei der Hauptkörper der Scheibe (1) aus einem Kunststoff- oder Metallmaterial hergestellt ist, während die Scheibe (1) insgesamt, d. h. die Scheibe mit der integrierten Dichtung (2, 2'), aus zwei verschiedenen Materialien/Zweikomponentenmaterial hergestellt ist, vorzugsweise Polypropylen, PP, Polyethylen hoher Dichte, HDPE, Polyvinylchlorid, PVC, Polyamid/Nylon, PA oder Aluminium und synthetischem Kautschuk wie thermoplastischem Elastomer, TPE, Styrol-Ethylen-Butylen-Styrol, SEBS oder thermoplastischem Olefin, TPO.

11. Verfahren zum Installieren einer Scheibe (1) nach einem der Ansprüche 1-10 an einer Auskleidung (11), **dadurch gekennzeichnet, dass** es die folgenden Schritte umfasst:
- eine Scheibe (1) nach einem der Ansprüche 1 bis 10, mit ihrer nach außen gedrehten Dichtung, wird auf einen Ankerbolzen (12) geschraubt, bis sie auf eine vorinstallierte Anschlageinrichtung auf dem Ankerbolzen (12), vorzugsweise eine Mutter (8), in einem vorbestimmten Abstand von der Tunnelwand trifft,
- die Auskleidung (11) wird an Perforationen in der Auskleidung (11) auf den Ankerbolzen (12) geschraubt, der der Dichtungsseite der Scheibe (1) zugewandt ist,
- eine weitere Scheibe (1), mit ihrer nach innen in Richtung der Auskleidung (11) gedrehten Dichtung, wird, entgegengesetzt zu der zuerst installierten Scheibe (1), wird auf den Ankerbolzen (12) geschraubt, der mit seiner Dichtungsseite der Auskleidung (11) zugewandt ist,
- eine Anschlageinrichtung, vorzugsweise eine Mutter (8), wird auf den Ankerbolzen (12) geschraubt, wodurch die Scheiben (1) auf beiden Seiten der Auskleidung (11) gegeneinander gespannt werden, wobei die zwei gegenüberliegenden inneren Dichtungen (2) einander gegenüberliegen oder auf jede Seite der Auskleidung (11) drücken, um die Dichtung zu verformen und dadurch die inneren Dichtungen (2) gegen den Bolzen (12) zu drücken, wodurch ein wasserdichter Übergang zu dem Bolzen (12) hergestellt wird.

12. Verfahren zum Installieren einer Scheibe (1) nach Anspruch 11, wobei die Auskleidung (11) eine PE-Schaumauskleidung (11) ist und wobei ein Abstandhalter (9) vor dem Installieren der Scheibe (1) in ein perforiertes Loch in der PE-Schaumauskleidung (11) installiert wird oder durch die PE-Schaumauskleidung (11) mit Kraft gedrückt wird, wo die innere Dichtung (2) jeder Scheibe (1) zu den Endflächen des Abstandhalters (9) gequetscht wird, um die innere Dichtung (2) zu verformen, wodurch ein wasserdichter Übergang zu der Schraube (12) hergestellt wird.

13. Verfahren zum Herstellen der Scheibe (1) nach einem der Ansprüche 1-10 in einem Spritzgussprozess unter Verwendung mindestens einer Spritzgussmaschine, wobei der Hauptkörper der Scheibe (1) mit dem TPE-, SEBS- oder TPO-Material umspritzt wird, **dadurch gekennzeichnet, dass** der Spritzgussprozess entweder ein einstufiger oder ein zweistufiger Prozess ist.

14. Verfahren zum Herstellen der Scheibe (1) nach Anspruch 13, wobei das einstufige Spritzgussverfahren die Verwendung einer Spritzgussmaschine mit zwei Einspritzeinheiten umfasst, bei der das TPE, SEBS oder TPO später oder unmittelbar nach dem Formen des PP, HDPE, PVC oder PA direkt auf das PP, HDPE, PVC oder PA umspritzt wird, mit der gleichen Spritzgussmaschine, bei der zum einen das PP, HDPE, PVC oder PA in eine Ausgangsform eingespritzt wird und zum anderen das TPE, SEBS oder TPO in eine auf die Ausgangsform aufgesetzte Sekundärform durch Drehen einer Kernform eingespritzt wird.

15. Verfahren zum Herstellen der Scheibe (1) nach Anspruch 13, wobei der zweistufige Prozess die folgenden Schritte umfasst:
- einen Schritt, bei dem der Hauptkörper der Scheibe (1) in einer ersten Maschine entweder durch eine erste Spritzgussmaschine geformt oder durch Metallbearbeitung gepresst wird,
- einen weiteren Schritt des Überführens des Hauptkörpers der Scheibe (1) in die Form der zweiten Maschine zum Spritzgießen, wobei das TPE, SEBS oder TPO direkt auf den Hauptkörper der Scheibe (1) umspritzt wird.

## Revendications

1. Disque (1) pour la fixation et le support étanches d'un revêtement (11) ou d'une plaque ou d'un tapis d'isolation sur une surface de support, telle qu'une paroi et/ou un plafond dans un tunnel (10), le revêtement (11) étant destiné à être fixé sur la surface de support par un certain nombre de boulons (12) fixés dans la surface de support, fixé aux boulons (12) au moyen d'un ou plusieurs disques (1) et d'un joint d'étanchéité (2, 2') fournissant une surface de verrouillage et d'étanchéité autour du boulon (12) et de la perforation du revêtement (11), chacun avec un trou traversant, destiné à être enfilé sur le boulon (12) correspondant et positionné sur au moins un côté du revêtement (11), dans lequel le joint d'étanchéité (2, 2') fait face au boulon et au revêtement lors de l'utilisation et forme une unité intégrée avec le disque (1), dans lequel le joint d'étanchéité comprend un joint d'étanchéité (2') périphérique externe agencé le long du bord externe du disque pour faire face au revêtement et un joint d'étanchéité (2) interne placé au centre du disque (1) pour assurer l'étanchéité vers le boulon (12), **caractérisé en ce que** le joint d'étanchéité (2, 2') ne fait saillie que d'un côté du disque (1) destiné à être tourné vers le revêtement (11) et **en ce que** le joint d'étanchéité (2) interne fait saillie, dans une direction axiale, hors/à l'extérieur du joint d'étanchéité (2') périphérique externe et qui comprend une surface inférieure approximativement horizontale configurée pour appuyer contre une surface opposée lors de l'utilisation.

2. Disque (1) selon la revendication 1,
dans lequel le joint d'étanchéité (2) interne faisant saillie hors de la surface d'étanchéité du disque (1) est configuré pour être pressé vers la surface à étancher et contre le boulon (12) et dans les filetages du boulon lorsqu'il est activé, réalisant une transition étanche à l'eau pour le boulon (12).

3. Disque (1) selon l'une des revendications 1 à 2,
dans lequel le joint d'étanchéité (2') périphérique agencé autour du bord externe ou de la circonférence du disque (1) sur la surface est destiné à être orienté vers le revêtement (11), et est de préférence formé d'un certain nombre d'arêtes agencées de manière concentrique.

4. Disque (1) selon l'une des revendications 1 à 2,
dans lequel le joint d'étanchéité (2') périphérique agencé autour du bord externe ou de la circonférence du disque (1) sur la surface destinée à être orientée vers le revêtement (11) est formé d'une nervure agencée de manière concentrique, à la forme arrondie et semi-circulaire ou semi-ovale au niveau de la circonférence du disque (1).

5. Disque (1) selon la revendication 2 ou 3,
dans lequel le joint d'étanchéité (2') périphérique externe est solidaire du joint d'étanchéité (2) interne et est réparti radialement sous forme de nervures depuis le joint d'étanchéité (2) interne vers une nervure agencée de manière concentrique autour du bord externe de la circonférence du disque (1), ou
dans lequel le joint d'étanchéité (2') périphérique externe est solidaire du joint d'étanchéité (2) interne et est réparti comme répartition radiale sous forme de nervures à partir du joint d'étanchéité (2) interne avec des nervures de croisement dans un motif de croisement comme un motif gaufré s'étendant jusqu'à une nervure agencée de manière concentrique autour du bord externe de la circonférence du disque (1), ou
dans lequel le joint d'étanchéité (2') périphérique externe est agencé avec des nervures réparties dans la direction radiale à partir du joint d'étanchéité (2) interne vers une nervure formée arrondie, circulaire ou ovale agencée de manière concentrique autour de la circonférence du disque (1), le joint d'étanchéité (2') externe comprend en outre des nervures, de préférence perpendiculaires et au moins une par nervure dans la direction radiale formant un motif de croisement.

6. Disque (1) selon l'une des revendications 1 à 5,
dans lequel le disque (1), du côté opposé à la surface d'étanchéité, comporte plusieurs arêtes (6), réparties dans une direction radiale à partir du trou central (5), se verrouillant vers un moyen d'arrêt, tel qu'un écrou (8), lorsqu'il est serré contre la surface et dans lequel le joint d'étanchéité (2) interne se termine à l'intérieur du trou central (5) du côté se verrouillant vers le moyen d'arrêt et/ou est ainsi protégé par le matériau du disque (1) rigide pour protéger le joint d'étanchéité contre un contact direct avec le moyen d'arrêt et/ou les mouvements de rotation du moyen d'arrêt, et
dans lequel le disque (1), du côté opposé à la surface d'étanchéité, comprend des nervures (4) établies à travers la surface circulaire du disque (1) afin d'augmenter la rigidité en flexion du disque (1).

7. Disque (1) selon l'une des revendications 1 à 6,
dans lequel le joint d'étanchéité (2, 2') est pressé dans le trou central (5) et est déformé lorsqu'il est pressé contre le joint d'étanchéité ou le revêtement opposé et étanche suffisamment le boulon (12) et dans les filetages du boulon et le trou perforé dans le revêtement dans lequel le boulon (12) d'ancrage fait saillie lorsque le revêtement (11) est installé.

8. Disque (1) selon l'une des revendications 1 à 7,
dans lequel le joint d'étanchéité (2) interne au niveau du trou central (5) du disque (1) comprend un chanfrein sur le joint d'étanchéité (3), incliné vers le trou central (5) et la surface du joint d'étanchéité faisant face au boulon (12).

9. Disque (1) selon les revendications 1 à 8 dans lequel le disque (1) est utilisé des deux côtés du revêtement (11), assemblé latéralement inversé et fixé par des écrous (8) serrés pour presser les disques (1) et ainsi les joints d'étanchéité (2, 2') dans le centre du disque et sur les bords externes du disque (1) des deux côtés du revêtement (11) l'un vers l'autre de manière étanche à l'eau.

10. Disque (1) selon les revendications 1 à 9
dans lequel le corps principal du disque (1) est constitué d'un matériau plastique ou métallique, tandis que le disque (1) au total, c'est-à-dire le disque avec le joint d'étanchéité (2, 2') intégré est constitué de deux matériaux différents/d'un matériau à deux composants, de préférence le polypropylène, PP, le polyéthylène haute densité, PEHD, le chlorure de polyvinyle, PVC, le polyamide/nylon, PA ou l'aluminium et un caoutchouc synthétique tel que l'élastomère thermoplastique, TPE, le styrène éthylène butylène styrène, SEBS ou l'oléfine thermoplastique, TPO.

11. Procédé d'installation du disque (1) selon l'une des revendications 1 à 10 sur un revêtement (11), **caractérisé en ce qu'**il comprend les étapes suivantes :
- un disque (1) selon l'une quelconque des revendications 1 à 10, avec son joint d'étanchéité tourné vers l'extérieur, est enfilé sur un boulon (12) d'ancrage jusqu'à rencontrer un moyen d'arrêt préinstallé sur le boulon (12) d'ancrage, de préférence un écrou (8), à une distance prédéterminée de la paroi du tunnel,
- le revêtement (11) est enfilé au niveau de perforations dans le revêtement (11) sur le boulon (12) d'ancrage faisant face au côté d'étanchéité du disque (1),
- un autre disque (1), avec son joint d'étanchéité tournant vers l'intérieur en direction du revêtement (11), à l'opposé du disque (1) installé en premier lieu, est enfilé sur le boulon (12) d'ancrage, faisant face avec son côté d'étanchéité contre le revêtement (11),
- un moyen d'arrêt, de préférence un écrou (8), est enfilé sur le boulon (12) d'ancrage, serrant les disques (1) des deux côtés du revêtement (11) l'un vers l'autre, les deux joints d'étanchéité (2) internes opposés appuyant face à face ou appuyant de chaque côté du revêtement (11) afin de déformer le joint d'étanchéité et pressant ainsi les joints d'étanchéité (2) internes vers le boulon (12) en réalisant une transition étanche à l'eau pour le boulon (12).

12. Procédé d'installation d'un disque (1) selon la revendication 11, dans lequel le revêtement (11) est un revêtement (11) en mousse de PE et dans lequel une entretoise (9) est installée dans un trou perforé dans le revêtement (11) en mousse de PE avant l'installation du disque (1) ou elle est poussée à travers le revêtement (11) en mousse de PE par la force où le joint d'étanchéité (2) interne de chaque disque (1) est pressé vers les surfaces d'extrémité de l'entretoise (9) afin de déformer le joint d'étanchéité (2) interne en réalisant une transition étanche à l'eau pour le boulon (12).

13. Procédé de fabrication du disque (1) selon l'une des revendications 1 à 10 dans un processus de moulage par injection en utilisant au moins une machine de moulage par injection où le corps principal du disque (1) est surmoulé par le matériau TPE, SEBS ou TPO, **caractérisé en ce que le** processus de moulage par injection est un processus en une ou deux étapes.

14. Procédé de fabrication du disque (1) selon la revendication 13, dans lequel le processus de moulage par injection en une étape comprend l'utilisation d'une machine de moulage par injection avec deux unités d'injection où le TPE, SEBS ou TPO est surmoulé directement sur le PP, PEHD, PVC ou PA plus tard ou immédiatement après le PP, PEHD, PVC ou PA a été moulé, avec la même machine de moulage par injection où le PP, PEHD, PVC ou PA est d'abord injecté dans un moule initial et, ensuite, le TPE, SEBS ou TPO est injecté dans un moule secondaire placé au-dessus du moule initial par rotation d'un moule central.

15. Procédé de fabrication du disque (1) selon la revendication 13, dans lequel le processus en deux étapes comprend les étapes suivantes :
- une étape où le corps principal du disque (1) dans une première machine est soit moulé par une première machine de moulage par injection, soit pressé par métallurgie,
- une étape supplémentaire de transfert du corps principal du disque (1) dans le moule de la seconde machine de moulage par injection, où le TPE, SEBS ou TPO est surmoulé directement sur le corps principal du disque (1).
